(19) Europäisches Patentamt
European Patent Office
Office européen des brevets

(11) **EP 1 604 120 B1**

(12) **EUROPÄISCHE PATENTSCHRIFT**

(45) Veröffentlichungstag und Bekanntmachung des Hinweises auf die Patenterteilung:
**23.04.2008  Patentblatt 2008/17**

(21) Anmeldenummer: **04704994.5**

(22) Anmeldetag: **24.01.2004**

(51) Int Cl.:
*F15B 19/00* *(2006.01)*

(86) Internationale Anmeldenummer:
**PCT/EP2004/000587**

(87) Internationale Veröffentlichungsnummer:
**WO 2004/083650 (30.09.2004 Gazette 2004/40)**

(54) **VERFAHREN ZUR FUNKTIONSPRÜFUNG EINES HYDRAULIKVENTILS**

METHOD FOR TESTING THE FUNCTION OF A HYDRAULIC VALVE

PROCEDE POUR L'ESSAI DE FONCTIONNEMENT D'UNE SOUPAPE HYDRAULIQUE

(84) Benannte Vertragsstaaten:
**DE FR**

(30) Priorität: **19.03.2003  DE 10312087**

(43) Veröffentlichungstag der Anmeldung:
**14.12.2005  Patentblatt 2005/50**

(73) Patentinhaber: **Daimler AG**
**70327 Stuttgart (DE)**

(72) Erfinder:
• **GRAMKOW, Thomas**
**12247 Berlin (DE)**
• **SCHMIDT, Peter**
**10243 Berlin (DE)**

(74) Vertreter: **Straub, Bernd**
**Daimler AG**
**Intellectual Property Management**
**IPM - C106**
**70546 Stuttgart (DE)**

(56) Entgegenhaltungen:
**US-A- 1 554 637      US-A- 3 100 392**
**US-A- 5 113 705      US-B1- 6 466 893**

EP 1 604 120 B1

**Beschreibung**

Die Erfindung betrifft ein Verfahren zur Funktionsprüfung eines Hydraulikventils gemäß Anspruch 1.

Bekannt sind Hydraulikventile, die als Proportionalventile ausgeführt sind und beispielsweise zur hydraulischen Ansteuerung von Nockenwellenverstellsystemen eingesetzt werden. Ein derartiges Proportionalventil weist einen Druckanschluss, mindestens einen Reservoiranschluss, mindestens einen Verbraucheranschluss sowie einen in einem Steuerzylinder beweglich gelagerten, mittels einer Feder vorgespannten Steuerkolben auf, der zur Steuerung des Volumenstroms eines Hydraulikmediums dient. Der Steuerkolben wird mittels Magnetkraft bewegt. Hierzu wird ein strombeaufschlagbares Magnetteil eingesetzt, das mit dem Steuerkolben zusammenwirkt. Die Magnetkraft ändert sich in Abhängigkeit der Höhe des elektrischen Stroms, wodurch sich auch proportional die Steuerkolbenposition und somit auch der durch das Hydraulikventil fließende Volumenstrom ändert.

Zum Zwecke einer Funktionsprüfung des Proportionalventils wird in dieses das im späteren Einsatz des Proportionalventils verwendete Hydraulikmedium unter Druck eingeleitet und dessen Volumenstrom über den vom Steuerkolben zurückgelegten Weg beziehungsweise über den an das Magnetteil angelegten Strom aufgezeichnet. Die so übermittelte Volumenstromkennlinie muss dann innerhalb festgelegter Grenzen liegen. Falls dies nicht der Fall ist, wird das Proportionalventil gegebenenfalls justiert oder nachbearbeitet. Die Funktionsprüfung des Hydraulikventils findet häufig im Fertigungsprozess statt, so dass dort Verunreinigungen durch das hydraulische Prüfmedium auftreten können. Nachteilig sind weiterhin die relativ langen Prüfzeiten, wodurch die Taktzeit zur Herstellung der Hydraulikventile in der Serienproduktion entsprechend hoch ist. Des Weiteren ist eine aufwendige Prüfausrüstung erforderlich.

In der US-A-3 100 392 wird ein Verfahren zur Funktionsprüfung von Hydraulikventilen offenbart, bei dem als Prüfmedium ein unter Druck stehendes, gasförmiges Medium verwendet wird.

Ähnliche Verfahren sind auch in der US-A-1 554 637, der US-A-5 113 705 sowie in der US-B1-6 466 893 offenbart.

Es ist Aufgabe der Erfindung, ein Verfahren der eingangs genannten Art zu schaffen, bei dem eine hohe Funktionssicherheit gewährleistet werden kann.

Zur Lösung der Aufgabe wird ein Verfahren mit den Merkmalen des Anspruchs 1 vorgeschlagen. Es sieht vor, dass zur Funktionsprüfung eines Hydraulikventils als Prüfmedium ein unter Druck stehendes gasförmiges Medium verwendet wird. Weiterhin ist der Druck des gasförmigen Mediums einstellbar und während des Prüfens konstant. Der Steuerkolben wird zur Prüfung des Hydraulikventils aus einer Ausgangsstellung in eine zweite Stellung und aus der zweiten Stellung wieder zurück in die Ausgangsstellung verlagert. Die Verlagerungsgeschwindigkeit des Steuerkolbens ist während der Prüfung des Hydraulikventils konstant.

Vorzugsweise wird Luft als Prüfmedium verwendet. Durch die pneumatische Prüfung des Hydraulikventils kann die Prüfzeit gegenüber den bekannten Prüfverfahren deutlich reduziert werden, da insbesondere der Anschluss des Hydraulikventils an eine Prüfmediumversorgung deutlich einfacher ist. Vorteilhaft ist weiterhin, dass durch die Verwendung eines gasförmigen Prüfmediums keine durch die Funktionsprüfung verursachten Ölverunreinigungen im Fertigungsprozess auftreten.

Das erfindungsgemäße Verfahren ist besonders vorteilhaft zur Funktionsprüfung von hydraulischen Proportionalventilen, insbesondere Proportional-Wege-Ventilen, insbesondere zur hydraulischen Ansteuerung von Nockenwellenverstellsystemen einsetzbar. Das Prüfverfahren ist selbstverständlich nicht auf diese spezielle Art von Hydraulikventilen beschränkt, sondern ist grundsätzlich universell für Hydraulikventile einsetzbar.

Vorteilhafte Ausführungsformen des Verfahrens ergeben sich aus Kombinationen der in den Unteransprüchen genannten Merkmale.

Die Erfindung wird im Folgenden anhand der Zeichnung näher erläutert. Es zeigen:

Fig. 1    eine Ansicht eines Ausführungsbeispiels eines magnetisch betätigbaren Hydraulikventils, teilweise geschnitten;

Fig. 2    eine Ansicht eines in einem Prüfblock angeordneten Hydraulikteils des Hydraulikventils gemäß Figur 1;

Fig. 3    einen Graphen, bei dem die Volumenstromkennlinie des mit einem gasförmigen Prüfmedium beaufschlagten Hydraulikventils gemäß Figur 1 über der Zeit aufgetragen ist;

Fig. 4    einen Graphen, bei dem die auf einen Federkraft beaufschlagten Steuerkolben des Hydraulikventils gemäß Figur 1 aufgebrachte Kraft über der Zeit aufgetragen ist,

Fig. 5    einen Graphen, in dem die Kraft-Hysterese-Kennlinie des Hydraulikventils gemäß Figur 1 aufgetragen ist und

Fig. 6    einen Ausschnitt eines Ausführungsbeispiels eines Prüfstands zur Funktionsprüfung von Hydraulikventilen.

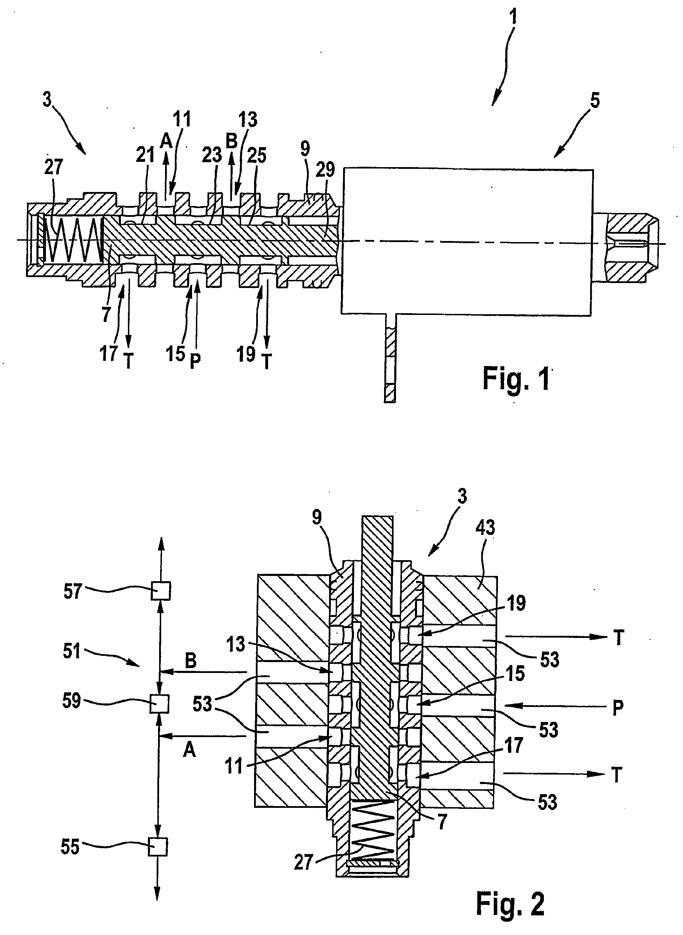

Figur 1 zeigt einen Teil eines Ausführungsbeispiels eines elektrohydraulischen Proportional-Wege-Ventils, nachfolgend kurz Hydraulikventil 1 genannt, das ein Hydraulikteil 3 und ein Magnetteil 5 umfasst. Der Aufbau und die Funktion des Hydraulikventils 1 ist allgemein bekannt, so dass im Folgenden nur kurz darauf eingegangen wird.

Das Hydraulikteil 3 umfasst ein von einem Steuerkolben 7 gebildetes Steuerelement, das in einem Steuerzylinder 9 axial verschiebbar angeordnet ist. Der Steuerzylinder 9 ist unter anderem mit Steuerbohrungen 11, 13, 15, 17 und 19 versehen, die vom Steuerkolben 7 gesteuert werden. Der Steuerzylinder 9 weist bei diesem Ausführungsbeispiel weitere, nicht bezeichnete Steuerbohrungen auf, auf deren Funktion hier nicht näher eingegangen wird.

Die Steuerbohrung 11 bildet einen Verbraucheranschluss A und die Steuerbohrung 13 einen Verbraucheranschluss B, die jeweils über eine geeignete Mediumverbindung beispielsweise mit jeweils einem Arbeitsraum eines Zylinders verbindbar sind. Die Steuerbohrung 15 bildet einen Druckanschluss P, an den eine Druckmediumpumpe angeschlossen wird. Die Steuerbohrungen 17 und 19 bilden jeweils einen Reservoiranschluss T, die mit einem Tank verbindbar sind. Zur Steuerung der Durchflussmenge weist der Steuerkolben 7 Steuernuten 21, 23 und 25 auf, mittels denen -je nach Stellung des Steuerkolbens 7- der Druckanschluss P mit dem Verbraucheranschluss A beziehungsweise B und der Verbraucheranschluss A beziehungsweise B mit dem Reservoiranschluss T verbunden werden.

Der Steuerkolben 7 ist an seinem dem Magnetteil 5 abgewandten Ende durch eine Druckfeder 27 kraftbeaufschlagt, die den Steuerkolben 7 in Richtung auf das Magnetteil 5 gegebenenfalls gegen einen Anschlag drückt. Der Steuerkolben 7 weist an seinem magnetteilseitigen Ende einen Zapfen 29 auf, an dem er mittels des Magnetteils 5 mit einer entgegen der Kraft der Feder 27 wirkenden Druckkraft beaufschlagbar ist.

Das Magnetteil 5 ist hier von einem drückenden, auch als Druckmagnet bezeichneten Proportionalmagnet gebildet, der einen Ankerstößel umfasst, auf dem ein Magnetanker befestigt und in einem Spulraum einer Magnetspule axial verschiebbar geführt ist. Wird die Magnetspule bei einem elektrischen Anschluss bestromt, bewegt sich der Magnetanker im Magnetfeld der Magnetspule auf einen topfförmigen Polkern eines Magnetflansches zu. Dabei legt sich der Ankerstößel stirnseitig an dem Zapfen des Steuerkolbens 7 und verstellt diesen entsprechend der Bestromung der Magnetspule entgegen der Kraft der Druckfeder 27 bis maximal zu einem, in Figur 1 nicht dargestellten Endanschlag.

In Figur 1 ist der Steuerkolben 7 in einer Mittenstellung angeordnet, in der er den Durchgang vom Druckanschluss P zu den Verbraucheranschlüssen A,B und den Reservoiranschlüssen T sperrt.

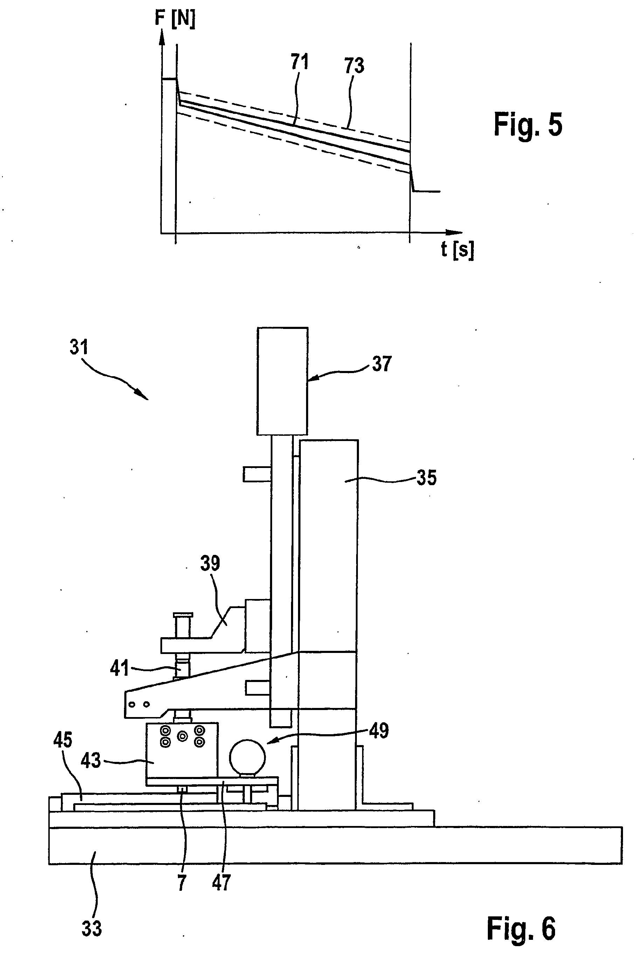

Zur pneumatischen Funktionsprüfung des Hydraulikteils 3 des anhand der Figur 1 beschriebenen hydraulischen Proportionalventils ist ein Prüfstand 31 vorgesehen, von dem in Figur 6 ein Ausführungsbeispiel abgebildet ist. Der Prüfstand 31 umfasst eine Grundplatte 33, an der eine senkrecht dazu verlaufende Profilsäule 35 angeordnet ist, an der ein Linearantrieb 37 befestigt ist. Mit Hilfe des Linearantriebs 37, der beispielsweise eine Spindel mit einem Servomotor umfassen kann, ist ein von einem Winkel gebildetes Adaptionselement 39 senkrecht zur Flachseite der Grundplatte 33, also in vertikaler Richtung, verfahrbar. Am Adaptionselement 39 ist ein stiftförmiges, hier federnd gelagertes Kontaktelement 41 vorgesehen, das unmittelbar mit dem Steuerkolben 7 zusammenwirkt, das heißt, bei einem Verfahren des Adaptionselements 39 mittels des Linearantriebs 37 verschiebt das Kontaktelement 41 den Steuerkolben 7 innerhalb des Steuerzylinders 9 in axialer Richtung. Das Hydraulikteil 3 selbst befindet sich in einem Prüfblock 43, der nachfolgend noch anhand der Figur 2 näher erläutert wird. Der Prüfblock 43 ist auf einer auf Schienen 45 gelagerten Adapterplatte 47 angeordnet, die mittels einer Fixiereinrichtung 49 lagegenau auf der Grundplatte 33 anordenbar ist. Die Fixiereinrichtung 49 weist hier einen an der Adapterplatte 47 angeordneten Arretierstift auf, der in mindestens eine, in einer lagefest zur Grundplatte 33 angeordneten Schiene vorgesehene Durchgangsöffnung einfahrbar ist. Der Prüfstand 31 weist ferner eine in Figur 2 schematisch angedeutete Ventileinrichtung 51 auf und ist an eine Druckluftversorgungseinrichtung mit entsprechenden Druck- und Entlüftungsleitungen/-kanälen anschließbar. Die Druckluftversorgung kann Teil des Prüfstands 31 sein.

Der Prüfstand 31 ist ferner mit einer in den Figuren nicht dargestellten Messeinrichtung ausgestattet, die einen Messrechner, einen Volumenstromsensor, insbesondere Laminar-Flow-Element, einen Zug-/Druckkraftsensor, einen Temperatursensor zur Erfassung der Prüfmedium- und/oder Umgebungstemperatur, einen Drucksensor für den Druckanschluss P und gegebenenfalls einen Wegsensor aufweist.

Figur 2 zeigt einen Längsschnitt durch den Prüfblock 43, in den das Hydraulikteil 3 leckagefrei mittels in Figur 2 nicht dargestellten Expansionsabdichtelementen adaptiert ist. Eine Trennung von Hydraulikteil 3 und Magnetteil 5 zur pneumatischen Funktionsprüfung des Hydraulikteils 3 ist nicht zwingend notwendig. Wenn jedoch das Hydraulikteil 3 zum Zwecke der Funktionsprüfung vom Magnetteil 5 getrennt ist, kann zusätzlich eine Steuerkolben-Kraftmessung durchgeführt werden, wodurch die Reibung im Hydraulikteil 3 festgestellt beziehungsweise gemessen werden kann.

Wie aus Figur 2 ersichtlich, ist der Prüfblock 43 mit in seiner Außenseite mündenden Kanälen 53 versehen, die jeweils einer der Steuerbohrungen 11 bis 19 zugeordnet sind. Die Querschnitte der von dem gasförmigen Prüfmedium durchströmten Kanäle 53 der Prüfadaption, vorzugsweise in sämtlichen weiteren Druck- und Entlüftungsleitungen/-kanälen der Ventileinrichtung 51, sind mindestens gleich groß wie oder größer als die durchströmten Querschnitte im Hydraulikteil 3.

In Figur 2 ist mittels Pfeilen angedeutet, dass an die Kanäle 53 jeweils eine Druck- beziehungsweise Entlüftungsleitung anschließbar ist. Um die Verbraucheranschlüsse A, B wahlweise jeweils gemeinsam oder unabhängig voneinander mit der Atmosphäre oder miteinander zu verbinden, weist die Ventileinrichtung 51 ein erstes Magnetventil 55, ein zweites Magnetventil 57 sowie ein drittes Magnetventil 59 auf.

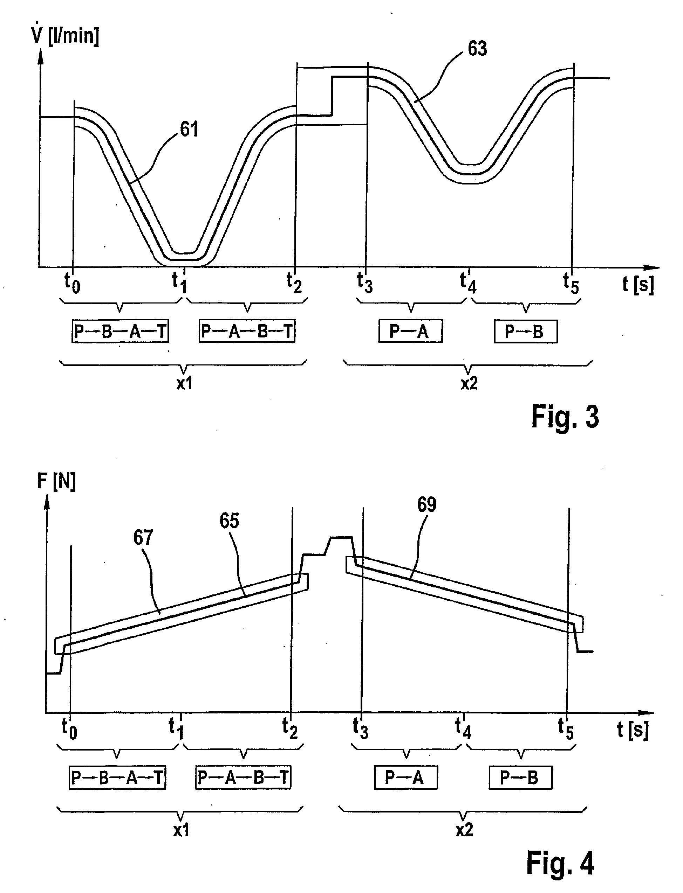

Im Folgenden wird ein mittels des Prüfstands 31 realisierbarer Prüfablauf unter Bezugnahme auf Figur 3 näher erläutert: Zur Vorbereitung wird das Hydraulikteil 3 im Prüfblock 43 adaptiert, der Prüfblock 43 in den Prüfstand 31 eingebracht sowie die Ventileinrichtung 51 an den Prüfblock 31 angeschlossen. Dann wird der Druckanschluss P mit dem gasförmigen Prüfmedium, das unter einem geregelten Prüfdruck steht, beaufschlagt. Mittels des Linearantriebs 37 wird der Steuerkolben 7 aus einer Ausgangsstellung, die eine durch einen Anschlag festgelegte Endlage sein kann, in eine zweite Stellung, die ebenfalls eine durch einen Anschlag festgelegte zweite Endlage sein kann, verschoben. Dieser erste Hub des Steuerkolbens 7 ist in Figur 3 mit x1 gekennzeichnet. Während des Durchlaufens des ersten Hubs x1 ist die Ventileinrichtung 51 so geschaltet, dass ein Kurzschluss zwischen den Verbraucheranschlüssen A und B besteht. Nachdem der erste Hub x1 durchlaufen ist, werden die Magnetventile 55 bis 59 so geschalten, dass die Verbraucheranschlüsse A und B mit der Atmosphäre verbunden sind. Dann wird der Steuerkolben 7 aus der zweiten Stellung in die Ausgangstellung zurückverlagert und durchfährt dabei einen zweiten Hub x2. Während der Hin- und Rückbewegung des Steuerkolbens 7 wird mittels des Volumenstromsensors der Volumenstrom mit einer vorgegebenen Tastrate erfasst. Die dadurch ermittelte Volumenstromkennlinie ist mit der Bezugsziffer 61 versehen. In Figur 3 ist ferner ein Toleranzband 63 abgebildet, dass die jeweils zulässige Ober- und Untergrenze des Volumenstroms bei einer bestimmten Stellung des Steuerkolbens 7 angibt.

Durch das vorstehend genannte pneumatische Prüfverfahren und die dabei ermittelte Volumenstromkennlinie können folgende Fertigungsfehler beziehungsweise Eigenschaften des Hydraulikteils 3 erkannt werden:

- Spalt zwischen Steuerkolben 7 und Steuerzylinder 9
- fehlende Bohrungen/Kanäle im Steuerkolben 7 und Steuerzylinder 9,
- Fehler in der Überdeckung der Steuerkanten zwischen Steuerkolben 7 und Steuerbohrungen 11 bis 19 einschließlich Kantenbrüche,
- versetzte Mittellage des Steuerkolbens 7,
- Hub des Steuerkolbens 7, und
- Verschluss des Steuerkolbens 7.

Während der Steuerkolben 7 den ersten Hub x1 durchläuft, sind die Verbraucheranschlüsse A, B mittels der Ventilreinrichtung 51 miteinander kurzgeschlossen, so dass das Druckmedium zunächst vom Druckanschluss P über den Verbraucheranschluss B zum Verbraucheranschluss A und von dort zum Reservoiranschluss T strömt (P→B→A→T). Wie aus Figur 3 ersichtlich, ist der Volumenstrom in Ausgangsstellung des Steuerkolbens 7 zur Zeit t0 sehr groß und erreicht in Mittenlage des Steuerkolbens 7 zur Zeit t1 ein Minimum. Nach dem Durchfahren der Mittellage steigt der Volumenstrom bis Erreichen der zweiten Steuerkolbenstellung 7 zur Zeit t2 wieder an. Dabei strömt das Prüfmedium von P über A nach B und von dort nach T (P→A→B→T).

Nach dem Durchlaufens des ersten Hubs x1 wird die Beschaltung der Ventileinrichtung 51 so geändert, dass die Verbraucheranschlüsse A, B nun mit der Atmosphäre verbunden sind, das heißt, das Prüfmedium wird über die Verbraucheranschlüsse A, B in die Umgebung abgeblasen. Der Steuerkolben 7 befindet sich zur Zeit t3 in der zweiten Stellung und wird nun zurückverlagert, wobei er zur Zeit t4 seine Mittelage durchfährt und zur Zeit t5 seine Ausgangsstellung wieder ereicht. Aus Figur 3 ist ohne weiteres ersichtlich, dass durch das Abblasen der Druckluft über die Verbraucheranschlüsse A, B an die Atmosphäre der durch das Hydraulikteil 3 fließende Volumenstrom deutlich größer als bei kurzgeschlossenen Verbraucheranschlüssen A, B ist. Der Grund hierfür ist, dass die Reibungsverluste durch das Abblasen der Druckluft für den Verbraucheranschluss A beziehungsweise B reduziert sind. Auf Grund des höheren Volumenstroms sind Kantenbrüche und Steuerkantenüberdeckungsfehler besser erkennbar.

Festzuhalten bleibt, dass bei dem vorstehend beschriebenen Prüfverfahren der Ventilweg zweimal durchfahren wird (doppelte Funktionsprüfung). Da dabei die Volumenstromkennlinie 61 sowohl als komplette Durchströmung (P→B→A→T beziehungsweise P→A→B→T) also auch als Teildurchströmung (P→A beziehungsweise P→B) des Hydraulikteils 3 aufgezeichnet wird, kann ein sehr genaues Prüfergebnis erzielt werden.

Figur 4 zeigt ein Diagramm, in dem eine während des vorstehend beschriebenen Prüfvorgangs mittels des Zug-/Druckkraftsensors ermittelte Kraftkennlinie 65 über der Zeit t aufgetragen ist. Des Weiteren sind Toleranzbänder 67 und 69 für die Kraft im Bereich der Hin- und Rückbewegungen (x1,x2) des Steuerkolbens 7 eingezeichnet. Im Diagramm ist also die zum Verschieben des Steuerkolbens 7 aus seiner Ausgangstellung in die zweite Stellung und wieder zurück in die Ausgangsstellung aufzubringende Kraft über der Zeit entnehmbar. Wenn die Verlagerung des Steuerkolbens 7 mit konstanter Geschwindigkeit erfolgt, was bevorzugt wird, ist hieraus ohne weiteres die Federkennlinie der Druckfeder 27 ermittelbar. Darüber hinaus ist ein Verklemmen/Verkanten des Steuerkolbens 7 erkennbar.

Figur 5 zeigt ein Diagramm, in dem die Kraft-Hysterese-Kennlinie 71 des Hydraulikteils 3 und mit gestrichelter Linie das zugehörige, vorgegebene Toleranzband 73 abgebildet sind. Anhand der Kraft-Hysterese-Kennlinie 71, die aus der Kraftkennlinie 65 gemäß der Figur 4 über der Zeit berechnet wird, kann ein Klemmen des Steuerkolbens 7 erkannt und Aussagen über die Rauhigkeit der Oberfläche der den Steuerkolben 7 aufnehmenden Bohrung im Steuerzylinder 9 sowie der Führungsfläche des Steuerkolbens 7 getroffen werden.

Die in den Figuren 3 bis 5 gezeigten Kennlinien und Toleranzbänder sind repräsentativ für das anhand der Figur 1 beschriebene 4/2-Proportional-Wege-Ventil 1, bei dem -wie beschrieben- die Volumenstromkennlinie 61 ausgehend von einem maximalen Durchflusswert bei voll geöffnetem Ventil einen Minimalwert erreicht und nach Überfahren der Absperrstellung (Mittellage) wieder ansteigt, bis wiederum der maximale Durchfluss, diesmal in umgekehrter Strömungsrichtung, erreicht ist. Bei anderen Ausführungsformen des Hydraulikventils ergeben sich entsprechend anders verlaufende Kennlinien.

Die Messdatenerfassung und/oder Messdatenauswertung ist bei dem anhand der Figuren beschriebene Prüfverfahren ohne weiteres online, das heißt, bereits während des Prüfvorgangs möglich, so dass entsprechend kurze Prüfzeiten erzielt werden können. Die ermittelten Kennwerte beziehungsweise Kennlinien werden mit zulässigen, vorgegebenen Grenzwerten verglichen, was automatisch mittels der Messeinrichtung erfolgen kann.

Festzuhalten bleibt, dass zur Feststellung, ob ein Hydraulikventil den daran gestellten Anforderung entspricht beziehungsweise gerade noch entspricht, es ausreichend sein kann, dass nur der Volumenstrom oder nur die Prüfkraft über der Zeit und/oder den Weg ermittelt wird. Dadurch können die Kosten für den Prüfstand 31 durch entsprechenden Verzicht auf spezielle Sensoren reduziert werden.

Als Prüfmedium kann an Stelle von Luft auch ohne weiteres ein anderes gasförmiges Medium verwendet werden.

**Patentansprüche**

1. Verfahren zur Funktionsprüfung eines Hydraulikventils (1), welches einen Druckanschluss (P), mindestens einen Reservoiranschluss (T), wenigstens einen Verbraucheranschluss (A,B) sowie einen verlagerbaren Steuerkolben (7) zur Steuerung des Volumenstroms $(\dot{V})$ eines vom Druckanschluss (P) zum Reservoiranschluss (T) beziehungsweise Verbraucheranschluss (A,B) fließenden Druckmediums aufweist, wobei als Prüfmedium ein unter Druck stehendes, gasförmiges Medium verwendet wird, welches am Druckanschluss (P) in das Hydraulikventil (1) eingeleitet wird,
**dadurch gekennzeichnet,**
**dass** der Druck des gasförmigen Mediums einstellbar und während des Prüfens konstant ist, der Steuerkolben (7) zur Prüfung des Hydraulikventils (1) aus einer Ausgangsstellung in eine zweite Stellung und aus der zweiten Stellung wieder zurück in die Ausgangsstellung verlagert wird und die Verlagerungsgeschwindigkeit des Steuerkolbens (7) während der Prüfung des Hydraulikventils (1) konstant ist.

2. Verfahren nach Anspruch 1,
**dadurch gekennzeichnet,**
**dass** der Steuerkolben (7) einen ersten Verbraucheranschluss (A) und einen zweiten Verbraucheranschluss (B) aufweist, dass während der Verlagerung des Steuerkolbens (7) aus der Ausgangsstellung in die zweite Stellung die Verbraucheranschlüsse (A,B) miteinander in Mediumverbindung stehen.

3. Verfahren nach Anspruch 2,
**dadurch gekennzeichnet,**
**dass** während der Rückverlagerung des Steuerkolbens (7) aus der zweiten Stellung in die Ausgangsstellung die ersten und zweiten Verbraucheranschlüsse (A,B) jeweils mit der Atmosphäre verbunden sind.

4. Verfahren nach einem der Ansprüche 1 bis 3,
**dadurch gekennzeichnet,**
**dass** während der Verlagerung des Steuerkolbens (7) aus der Ausgangsstellung in die zweite Stellung und aus der zweiten Stellung wieder zurück in die Ausgangsstellung der Volumenstrom $(\dot{V})$ des gasförmigen Prüfmediums in Abhängigkeit der Zeit (t) und/oder dem vom Steuerkolben (7) zurückgelegten Weg (x1,x2) ermittelt werden/wird, und dass die ermittelten Volumenstromwerte/-kennlinie(n) mit Soll- und/oder Grenzwerten beziehungsweise mindestens einer Soll- und/oder Grenzwertkennlinie verglichen werden.

5. Verfahren nach einem der Ansprüche 1 bis 4,
**dadurch gekennzeichnet,**
**dass** der Steuerkolben (7) mittels wenigstens eines Federelements (27) kraftbeaufschlagt oder kraftbeaufschlagbar ist und dass während der Verlagerung des Steuerkolbens (7) aus der Ausgangsstellung in die zweite Stellung und aus der zweiten Stellung wieder zurück in die Ausgangsstellung die dafür aufzubringende Kraft (F) in Abhängigkeit der Zeit (t) und/oder dem vom Steuerkolben (7) zurückgelegten Weg (x1,x2) ermittelt werden/wird, und dass die ermittelten Kraftwerte/-kennlinie(n) mit Soll- und/oder Grenzwerten beziehungsweise mindestens einer Soll- und/oder Grenzwertkennlinie verglichen werden.

6. Verfahren nach Anspruch 5,
**dadurch gekennzeichnet,**
**dass** die Kraft-Hysterese-Kennlinie des Hydraulikventils (1) ermittelt, vorzugsweise aus den aufgezeichneten Werten der zur Verlagerung des Steuerkolbens (7) aus der Ausgangsstellung in die zweite Stellung beziehungsweise aus der zweiten Stellung in die Ausgangsstellung aufzubringenden Kraft (F) berechnet wird.

7. Verfahren nach einem der vorangehenden Ansprüche,
**dadurch gekennzeichnet,**

**dass** die Abtastrate des Volumenstroms ( $\dot{V}$ ) beziehungsweise der auf den Steuerkolben (7) aufgebrachten Kraft (F) während des Prüfvorgangs einstellbar ist.

8. Verfahren nach einem der Ansprüche 1 bis 7, **dadurch gekennzeichnet,**
**dass** die Messdatenerfassung und/oder Messdatenauswertung online erfolgt.

## Claims

1. Method for the functional testing of a hydraulic valve (1) which has a pressure connection (P), at least one reservoir connection (T), at least one consumer connection (A, B) and a displaceable control piston (7) for controlling the volume flow ( $\dot{V}$ ) of a pressure medium flowing from the pressure connection (P) to the reservoir connection (T) or consumer connection (A, B), the test medium used being a gaseous medium which is under pressure and which is introduced into the hydraulic valve (1) at the pressure connection (P), **characterized in that** the pressure of the gaseous medium is adjustable and is constant during testing, the control piston (7) is displaced out of an initial position into a second position and out of the second position back again into the initial position in order to test the hydraulic valve (1), and the speed of displacement of the control piston (7) during the testing of the hydraulic valve (1) is constant.

2. Method according to Claim 1, **characterized in that** the control piston (7) has a first consumer connection (A) and a second consumer connection (B), and **in that**, during the displacement of the control piston (7) out of the initial position into the second position, the consumer connections (A, B) are medium-connected to one another.

3. Method according to Claim 2, **characterized in that**, during the return displacement of the control piston (7) out of the second position into the initial position, the first and second consumer connections (A, B) are in each case connected to the atmosphere.

4. Method according to one of Claims 1 to 3, **characterized in that**, during the displacement of the control piston (7) out of the initial position into the second position and out of the second position back again into the initial position, the volume flow ( $\dot{V}$ ) of the gaseous test medium is determined as a function of the time (t) and/or of the distance (x1, x2) covered by the control piston (7) and **in that** the determined volume-flow values/characteristic curve or curves are compared with desired and/or limit values or with at least one desired- and/or limit-value characteristic curve.

5. Method according to one of Claims 1 to 4, **characterized in that** the control piston (7) is acted upon with force or can be acted upon with force by means of at least one spring element (27), and **in that**, during the displacement of the control piston (7) out of the initial position into the second position and out of the second position back again into the initial position, the force (F) to be applied for this purpose is determined as a function of the time (t) and/or of the distance (x1, x2) covered by the control piston (7), and **in that** the determined force values/characteristic curve or curves are compared with desired and/or limit values or with at least one desired- and/or limit-value characteristic curve.

6. Method according to Claim 5, **characterized in that** the force hysteresis characteristic curve of the hydraulic valve (1) is determined, preferably is calculated from the recorded values of the force (F) to be applied in order to displace the control piston (7) out of the initial position into the second position or out of the second position into the initial position.

7. Method according to one of the preceding claims, **characterized in that** the sensing rate of the volume flow ( $\dot{V}$ ) or of the force (F) applied to the control piston (7) is adjustable during the testing operation.

8. Method according to one of Claims 1 to 7, **characterized in that** measurement data acquisition and/or measurement data evaluation take place/takes place on-line.

## Revendications

1. Procédé pour tester le fonctionnement d'une soupape hydraulique (1), qui présente un raccord de pression (P), au moins un raccord de réservoir (T), au moins un raccord de consommateur (A, B) ainsi qu'un piston de commande déplaçable (7) pour la commande du débit volumique ( $\dot{V}$ ) d'un fluide sous pression s'écoulant depuis le raccord de pression (P) jusqu'au raccord de réservoir (T) ou au raccord de consommateur (A, B), un fluide gazeux sous pression étant utilisé comme fluide de test, lequel est introduit au niveau du raccord de pression (P) dans la soupape hydraulique (1),
**caractérisé en ce que**
la pression du fluide gazeux peut être ajustée et est constante pendant le test, le piston de commande (7) pour tester la soupape hydraulique (1) est déplacé d'une position de départ dans une deuxième position et revient de la deuxième position à nouveau dans la position de départ, et la vitesse de déplacement du piston de commande (7) pendant le test de la soupape hydraulique (1) est constante.

2. Procédé selon la revendication 1, **caractérisé en ce que** le piston de commande (7) présente un premier raccord de consommateur (A) et un deuxième raccord de consommateur (B), et **en ce que** pendant le déplacement du piston de commande (7) de la position de départ dans la deuxième position, les raccords de consommateur (A, B) sont en liaison fluidique l'un avec l'autre.

3. Procédé selon la revendication 2, **caractérisé en ce que** pendant le déplacement de retour du piston de commande (7) de la deuxième position dans la position de départ, les premier et deuxième raccords de consommateur (A, B) sont connectés à chaque fois à l'atmosphère.

4. Procédé selon l'une quelconque des revendications 1 à 3, **caractérisé en ce que** pendant le déplacement du piston de commande (7) de la position de départ dans la deuxième position et son retour de la deuxième position à nouveau dans la position de départ, le débit volumique ( $\dot{V}$ ) du fluide de test gazeux est détecté en fonction du temps (t) et/ou de la course (x1, x2) parcourue par le piston de commande (7), et **en ce que** la au les caractéristiques des valeurs du débit volumique détectées sont comparées avec des valeurs de consigne et/ou limites respectivement avec ou moins une caractéristique de valeur de consigne et/ou limite.

5. Procédé selon l'une quelconque des revendications 1 à 4, **caractérisé en ce que** le piston de commande (7) est ou peut être sollicité en force par le biais d'au moins un élément de ressort (27) **en ce que** pendant le déplacement du piston de commande (7) de la position de départ dans la deuxième position et son retour de la deuxième position à nouveau dans la position de départ, la force (F) à appliquer à cet effet est détectée en fonction du temps (t) et/ou de la course (x1, x2) parcourue par le piston de commande (7), et **en ce que** la ou les caractéristiques des valeurs du débit volumique détectées sont comparées avec des valeurs de consigne et/ou limites respectivement avec au moins une caractéristique de valeur de consigne et/ou limite.

6. Procédé selon la revendication 5, **caractérisé en ce que** la caractéristique force-hystérésis de la soupape hydraulique (1) est détectée, de préférence à partir des valeurs enregistrées de la force (F) à appliquer pour le déplacement du piston de commande (7) de la position de départ dans la deuxième position ou pour son retour de la deuxième position dans la position de départ.

7. Procédé selon l'une quelconque des revendications précédentes, **caractérisé en ce que** la vitesse de balayage du débit volumique ( $\dot{V}$ ) ou de la force (F) appliquée sur le piston de commande (7) peut être ajustée pendant l'opération de test.

8. Procédé selon l'une quelconque des revendications 1 à 7, **caractérisé en ce que** la détection des données de mesure et/ou l'analyse des données de mesure s'effectuent en ligne.

**Fig. 1**

**Fig. 2**

$\dot{V}$ [l/min]

61

63

$t_0$  $t_1$  $t_2$  $t_3$  $t_4$  $t_5$  t [s]

| P→B→A→T | P→A→B→T | | P→A | P→B |

x1  x2

Fig. 3

F [N]

67  65

69

$t_0$  $t_1$  $t_2$  $t_3$  $t_4$  $t_5$  t [s]

| P→B→A→T | P→A→B→T | | P→A | P→B |

x1  x2

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3100392 A
- US 1554637 A
- US 5113705 A
- US 6466893 B1